# EUROPEAN PATENT APPLICATION

(11) **EP 2 557 578 A1**
(43) Date of publication of application: **13.02.2013**
(21) Application number: 11765621.5
(22) Date of filing: 30.03.2011
(51) Int. Cl.: H01G 9/00, H01G 9/04

(54) **METHOD OF MANUFACTURING ELECTRODE STRUCTURE, ELECTRODE STRUCTURE, AND CAPACITOR**

(30) Priority: 07.04.2010 JP 2010088243
(71) Applicant: Toyo Aluminium Kabushiki Kaisha, Osaka-shi, Osaka 541-0056 (JP)
(72) Inventor: NAKAYAMA, Kunihiko, Osaka-shi Osaka 541-0056 (JP); ASHITAKA, Zenya, Osaka-shi Osaka 541-0056 (JP); INOUE, Hidetoshi, Osaka-shi Osaka 541-0056 (JP); SUZUKI, Miho, Osaka-shi Osaka 541-0056 (JP)
(74) Representative: Grünecker, Kinkeldey, Stockmair & Schwanhäusser
(86) International application number: PCT/JP2011/057985
(87) International publication number: WO 2011/125721

(57) **Abstract**

Provided are an electrode structure capable of suppressing a leakage current, having a high capacitance, allowing an electrical short circuit caused through contact with an electrolyte to be suppressed, and operable to be applied as an anode of a capacitor; a method for manufacturing the electrode structure; and a capacitor including the electrode structure. The method for manufacturing the electrode structure includes: a covering layer formation step of forming on a surface of an aluminum material a covering layer of a dielectric precursor including valve metal; and a reduction heating step of heating in a reducing atmosphere including no carbon the aluminum material having the covering layer formed thereon. The electrode structure includes: an aluminum material; a covering layer being formed on a surface of the aluminum material, including valve metal, and having an electrically conductive portion; and an interposing layer being formed between the aluminum material and the covering layer and including aluminum and oxygen.

## Description

### TECHNICAL FIELD

The present invention relates generally to a method for manufacturing an electrode structure and, in particular, to a method for manufacturing an electrode structure used as a material of an electrode of a capacitor or the like, an electrode structure, and a capacitor including the electrode structure.

### BACKGROUND ART

For example, as disclosed in Japanese Patent Application Laid-Open Publication No. 62-222512 (Patent Document 1), a dielectric material having a high permittivity is widely used as an electronic material of a capacitor, a semiconductor device, a light-emitting device, or the like.

A capacitor includes two electrodes, that is, an anode and a cathode. As an anode material of an electrolytic capacitor, valve metal such as aluminum and tantalum, which allows an insulating oxide coating film to be generated on a surface thereof, is used. Here, the valve metal is metal covered by an oxide layer through anodic oxidation, and as the valve metal, aluminum, tantalum, niobium, titanium, hafnium, zirconium, zinc, tungsten, bismuth, antimony, and the like are cited. As a cathode material, any of an electrolytic solution, an inorganic semiconductor, an organic electrically conductive substance, or a metal thin film is used. In a case where the cathode material is the electrolytic solution, it is often the case that aluminum foil whose surface area is enlarged is used as a cathode terminal.

Conventionally, some methods of increasing a capacitance of a capacitor have been proposed.

For example, as a method of enlarging surface areas of anode and cathode terminals, Japanese Patent Application Laid-Open Publication No. 2004-259932 (Patent Document 2) discloses a method in which crystalline oxide including Pb is formed so as to be evenly distributed on a surface of aluminum foil and surface dissolution caused upon etching is suppressed, thereby obtaining the enlarged surface areas after the etching.

In addition, for example, as a method of forming a film which has high adhesiveness and is thick, Japanese Patent Application Laid-Open Publication No. 2003-55796 (Patent Document 3) discloses a method in which a titanium- phosphorus based composite oxide coating film is attached onto a surface of an aluminum base material.

Further, for example, as a material used for configuring a capacitive element, Japanese Patent Application Laid-Open Publication No. 10-182221 (Patent Document 4) discloses an article whose temperature coefficient of a permittivity is smaller.

Furthermore, for example, as a method of increasing surface areas of foil electrodes of an electrolytic capacitor, Japanese Patent Application Laid-Open Publication No. 11-317331 (Patent Document 5) discloses a method which includes a step of placing a base material in an inert atmosphere having a pressure of approximately 10⁻³ Torr through approximately 10⁻² Torr and a step of evaporating valve metal onto a base material under an inert atmosphere to provide the base material with a surface structure. However, in the method in which a dielectric layer including the valve metal is formed by the evaporation, not only it is required to retain a high vacuum but also it is difficult to industrially form a dielectric layer having an even thickness.

In the meantime, by using a sol-gel method, as compared with the evaporation method, it is easy to form a dielectric layer including the valve metal and the dielectric layer having the even thickness can be industrially formed. However, in the dielectric layer obtained by using the sol-gel method, defects such as cracks are easily caused in a step of forming the dielectric layer by heating a dielectric precursor, thereby leading to, for example, the problems in that adhesiveness to aluminum as a base material is weakened and in that a desired withstanding voltage cannot be obtained.

As a method of solving the above-mentioned problems, for example, International Publication No. WO 02/062569 (Patent Document 6) discloses a method of manufacturing a structure having an oxide layer on a base substance. This method includes: an application liquid preparation step of preparing an application liquid for an oxide layer; a base substance surface preprocessing step of obtaining a preprocessed base substance by preprocessing a surface of a base substance, aside from the application liquid preparation step; an application step of obtaining a coated base substance by applying the application liquid for an oxide layer to the preprocessed base substance; and a firing step of forming an oxide layer on the base substance by firing the coated base substance, and the base substance surface preprocessing step includes a first process of causing a surface of the base substance to have a one-dimensional or two-dimensional ordered structure.

However, even by employing this method, it is difficult to obtain an electrode structure which is excellent in adhesiveness and allows a high capacitance to be obtained with a desired withstanding voltage being maintained.

Therefore, International Publication No. WO 2007/055121 (Patent Document 7) discloses a method in which in order to improve adhesiveness between an aluminum material as a base material and a dielectric layer, a dielectric precursor including valve metal is formed on the aluminum material, and thereafter, by heating the resultant in a hydrocarbon atmosphere, a dielectric layer including the valve metal is formed on a surface of the aluminum material, and an interposing layer including aluminum and carbon is formed between the aluminum material and the dielectric layer, thereby manufacturing an electrode structure and enhancing the adhesiveness between the aluminum material and the dielectric layer in the electrode structure.

### CITATION LIST

### PATENT LITERATURE

Patent Document 1: Japanese Patent Application Laid-Open Publication No. 62-222512
Patent Document 2: Japanese Patent Application Laid-Open Publication No. 2004-259932
Patent Document 3: Japanese Patent Application Laid-Open Publication No. 2003-55796
Patent Document 4: Japanese Patent Application Laid-Open Publication No. 10-182221
Patent Document 5: Japanese Patent Application Laid-Open Publication No. 11-317331
Patent Document 6: International Publication No. WO 02/062569
Patent Document 7: International Publication No. WO 2007/055121

### SUMMARY OF THE INVENTION

### TECHNICAL PROBLEM

However, in the method of manufacturing the electrode structure, disclosed in International Publication No. WO 2007/055121 (Patent Literature 7), there have been the problems in that resulting from the interposing layer which is formed by the heating in the hydrocarbon atmosphere and includes the aluminum and the carbon, a leakage current increases and in that an electrical short circuit is caused through contact of the obtained electrode structure with an electrolyte. When the electrode structure obtained by employing the method disclosed in International Publication No. WO 2007/055121(Patent Literature 7) was used, in particular, as an anode of a solid electrolytic capacitor, the above-mentioned electrical short circuit was remarkably observed.

In addition, through the heating in the hydrocarbon atmosphere, surfaces or the whole of particles or the like of the dielectric substance including the valve metal are reduced. Through these reduced parts, a leakage current is likely to increase. In order to solve this problem, it is considered that through conducting further anodic oxidation of the electrode structure, an oxide coating film is formed on each of the surfaces of the particles or the like of the dielectric substance including the valve metal. However, even through the further anodic oxidation of the electrode structure, the oxide coating film is not formed on a part on which the interposing layer including the aluminum and the carbon is formed, and through excessive anodic oxidation to prevent the part, on which the interposing layer including the aluminum and the carbon is formed, from being exposed, a remarkable reduction in a capacitance results. Therefore, it is difficult to prevent the above-mentioned electrical short circuit while a high capacitance is maintained, and there has been a limit to suppression of the leakage current.

As described above, application of the electrode structure obtained by employing the method disclosed in International Publication No. WO 2007/055121(Patent Literature 7) is limited to a cathode of a capacitor, and application thereof as an anode is de facto difficult.

Hence, objects of the present invention are to solve the above-described problems and to provide an electrode structure capable of suppressing a leakage current, having a high capacitance, allowing an electrical short circuit caused through contact with an electrolyte to be suppressed, and operable to be applied as an anode of a capacitor; a method for manufacturing the electrode structure; and a capacitor including the electrode structure.

### SOLUTION TO PROBLEM

In order to solve the problems of the conventional technology, the present inventors have repeated eager researches. As a result, the present inventors found that an aluminum material including a covering layer formed of a dielectric precursor including valve metal is heated under specific conditions, thereby making it possible to obtain an electrode structure which allows the above-mentioned objects to be achieved. Based on the findings by the present inventors, the present invention was made.

A method for manufacturing an electrode structure according to the present invention includes: a covering layer formation step of forming on a surface of an aluminum material a covering layer of a dielectric precursor including valve metal; and a reduction heating step of heating in a reducing atmosphere including no carbon the aluminum material having the covering layer formed thereon.

In the method for manufacturing an electrode structure according to the present invention, it is preferable that the reducing atmosphere is an atmosphere including hydrogen.

In addition, in the method for manufacturing an electrode structure according to the present invention, it is preferable that the reduction heating step is conducted at a temperature in a range of greater than or equal to 450°C and less than 660°C.

The method for manufacturing an electrode structure according to the present invention may further include an oxidation heating step of heating the aluminum material in an oxidizing atmosphere after the reduction heating step.

Instead of the above-mentioned oxidation heating step, the method for manufacturing an electrode structure according to the present invention may further include an anodic oxidation step of anodizing the aluminum material after the reduction heating step.

An electrode structure according to the present invention includes: an aluminum material; a covering layer being formed on a surface of the aluminum material, including valve metal, and having an electrically conductive portion; and an interposing layer being formed between the aluminum material and the covering layer and including aluminum and oxygen.

In addition, in the electrode structure according to the present invention, it is preferable that the interposing layer is formed in at least one region of the surface of the aluminum material.

Furthermore, in the electrode structure according to the present invention, it is preferable that the interposing layer is formed of an aluminum oxide.

In the electrode structure according to the present invention, it is preferable that the valve metal is one or more kinds selected from the group consisting of magnesium, thorium, cadmium, tungsten, tin, iron, silver, silicon, tantalum, titanium, hafnium, aluminum, zirconium, and niobium.

In addition, in the electrode structure according to the present invention, it is preferable that the covering layer is formed of particles including the valve metal, and the electrically conductive portion has an oxidation number different from an oxidation number of a portion other than the electrically conductive portion and is present in at least one part of each of the particles.

Furthermore, in the electrode structure according to the present invention, it is preferable that each of the particles includes an inner portion and an outermost surface located outside the inner portion and at least one part of the outermost surface has a more oxidized dielectric than the inner portion.

A capacitor according to the present invention includes the above-described electrode structure.

### ADVANTAGEOUS EFFECTS OF THE INVENTION

According to the present invention, an electrode structure capable of suppressing a leakage current, having a high capacitance, and allowing an electrical short circuit caused through contact with an electrolyte to be suppressed can be obtained. In addition, preferably, the electrode structure can be configured so as to have a withstanding voltage, and thus, the electrode structure which can be applied as an anode of a capacitor can be obtained.

### BRIEF DESCRIPTION OF THE DRAWINGS

Fig. 1 is a photograph of a cross section of an aluminum material in example 6 whose each of the surfaces has a covering layer of a dielectric precursor formed thereon after a covering layer formation step, the cross section observed by using a field-emission-type scanning electron microscope.
Fig. 2 is a photograph of a cross section of an electrode structure obtained in example 6, the cross section observed by using the field-emission-type scanning electron microscope.
Fig. 3 is a photograph of the cross section of the electrode structure obtained in example 6, the cross section observed by using a scanning transmission-type electron microscope, the photograph showing portions (points) 1 and 2 at which an energy dispersive X-ray analysis was conducted.
Fig. 4 is a graph showing an X-ray diffraction result of an aluminum material in example 5 whose each of the surfaces has formed thereon a covering layer formed of a dielectric precursor after the covering layer formation step; and electrode structures obtained in example 5 through 7.
Fig. 5 a graph showing an X-ray diffraction result of electrode structures obtained in examples 7 and 8.
Fig. 6 is a graph showing changes occurring when a DC constant current was applied to electrode structures obtained in examples 6, 9, and 10.

### DESCRIPTION OF EMBODIMENTS

### (A method for manufacturing an electrode structure)

A method for manufacturing an electrode structure, according to the present invention, includes: a covering layer formation step of forming on a surface of an aluminum material a covering layer of a dielectric precursor including valve metal; and a reduction heating step of heating in a reducing atmosphere including no carbon the aluminum material having the covering layer formed thereon.

Hereinafter, the manufacturing method according to the present invention will be described in detail.

### (Covering layer formation step)

In the method, according to the present invention, for manufacturing an electrode structure, first, a covering layer formation step of forming on a surface of an aluminum material a covering layer of a dielectric precursor including valve metal is conducted.

Although a method of forming on the surface of the aluminum material as a base material the covering layer of the dielectric precursor including the valve metal is not particularly limited, a sol-gel method is favorably adopted. For example, by utilizing hydrolysis and polycondensation of an alkoxide organic compound or metallic salt, which includes a valve metal element, an application liquid may be prepared by gelling from a solution (sol) including oxide precursor particles as a dielectric precursor and applied onto the surface of the aluminum material. Alternatively, an application liquid may be prepared by emulsifying particles containing the valve metal in a solution and applied onto the surface of the aluminum material. A method of the application is not particularly limited, and a spin coating method, a bar coating method, a flow coating method, or a dip coating method is appropriately adopted. A thickness of the covering layer formed by the application can be controlled by the number of times at which coating is conducted and composition and a concentration of the application liquid. The aluminum material, whose each of the surfaces has the covering layer of the dielectric precursor including the valve metal formed thereon, obtained as described above is dried if necessary.

### (Reduction heating step)

In the manufacturing method according to the present invention, subsequently to the above-described covering layer formation step, a reduction heating step of heating, in a reducing atmosphere including no carbon, the aluminum material, which has the covering layer of the dielectric precursor including the valve metal formed thereon, is conducted.

The reducing atmosphere is not particularly limited, it is only required for a reducing substance to be present in a space in which the aluminum material, which has the covering layer of the dielectric precursor including the valve metal formed thereon, is placed, and the reducing substance may be used in any state of a liquid state, a gaseous state, and the like. For example, in a case where the reducing substance is in the gaseous state, an enclosed space for providing with the heat treatment the aluminum material, whose each of the surfaces has the covering layer of the dielectric precursor including the valve metal formed thereon, may be filled with the reducing substance alone or in combination with an inert gas. In addition, in a case where the reducing substance is in the liquid state, the enclosed space may be filled with the reducing substance alone or in combination with the inert gas so as to allow the reducing substance to be gasified.

The reducing substance is not particularly limited, hydrogen, ammonia, hydrazine, hydrogen sulfide, and the like are cited, and among these, the hydrogen is favorably used. The inert gas is not particularly limited, and specifically, nitrogen, helium, neon, argon, krypton, xenon, radon, and the like are cited.

A heating temperature may be appropriately set in accordance with composition of the aluminum material to be heated and composition, a thickness, or the like of the covering layer formed of the dielectric precursor including the valve metal. Ordinarily, however, it is preferable that the heating temperature is within a range of greater than or equal to 450°C and less than 660°C and it is more preferable that the heating temperature is within a range of greater than or equal to 530°C and less than or equal to 640°C. The heating temperature is set to be greater than or equal to 450°C, thereby allowing at least one part of the covering layer of the dielectric precursor including the valve metal, heated in the reducing atmosphere including no carbon, to be reduced. However, in the manufacturing method according to the present invention, heating the aluminum material, whose each of the surfaces has the covering layer of the dielectric precursor including the valve metal formed thereon, at a temperature of less than 450°C is not excluded, and the aluminum material, whose each of the surfaces has the covering layer of the dielectric precursor including the valve metal formed thereon, may be heated at a temperature exceeding at least 300°C. Although a heating time depends on a heating temperature or the like, it is preferable that the heating time is within a range of greater than or equal to one hour and less than or equal to 100 hours in general.

By conducting this reduction heating step, on the surface of the aluminum material, the covering layer including the valve metal and having an electrically conductive portion is formed. This electrically conductive portion is a portion obtained by reducing at least one part of the covering layer of the dielectric precursor including the valve metal. Between the aluminum material and the covering layer, an interposing layer including aluminum and carbon is not formed, but an interposing layer including the aluminum and oxygen is formed. As described above, since the interposing layer including the aluminum and the carbon is not formed, an electrode structure capable of suppressing a leakage current and suppressing an electrical short circuit caused through contact with an electrolyte can be obtained. In addition, since the covering layer has the electrically conductive portion, the covering layer has a high capacitance, as compared with a case where the covering layer has no electrically conductive portion.

### (Oxidation heating step)

After the above-described reduction heating step, an oxidation heating step of further heating the obtained electrode structure according to the present invention in an oxidizing atmosphere may be conducted.

In this oxidation heating step, as the oxidizing atmosphere, it is only required that oxygen is present in the space in which the aluminum material, whose each of the surfaces has the covering layer having the electrically conductive portion formed thereon, is placed, and the space may be filled with the oxygen alone or in combination with a non-reducing gas. It is preferable that as the oxidizing atmosphere, the space includes 2% through 50% by volume of the oxygen.

A heating temperature may be appropriately set in accordance with a withstanding voltage required of the electrode structure. Ordinarily, however, it is preferable that the heating temperature is within a range of less than or equal to 500°C and it is more preferable that the heating temperature is within a range of greater than or equal to 200°C and less than or equal to 400°C. Although a heating time depends on a heating temperature or the like, it is preferable that the heating time is within a range of greater than or equal to 10 second and less than or equal to 50 hours in general.

By conducting this oxidation heating step, the covering layer including the valve metal and having the electrically conductive portion is formed, at least one part of the covering layer has a reduced portion, and at least one part of an outermost surface of each of the particles of which the covering layer is formed has a more oxidized dielectric than an inner part of each of the particles. The electrode structure obtained as described above has a withstanding voltage.

### (Anodic oxidation step)

After the above-described heating step, an anodic oxidation step of further anodizing the obtained electrode structure according to the present invention may be conducted.

By conducting this anodic oxidation step, the covering layer can be oxidized, or defects such as cracks caused in the covering layer including the valve metal and having the electrically conductive portion can be repaired. Although the anodic oxidation step is not particularly limited, the anodic oxidation step may be conducted in a solution such as ammonium adipate at a voltage of greater than or equal to 1V and less than or equal to 100V. In addition, also by conducting the anodic oxidation step, the covering layer including the valve metal and having the electrically conductive portion is formed, at least one part of the covering layer has the reduced portion, and at least one part of the outermost surface of each of the particles of which the covering layer is formed has the more oxidized dielectric than the inner part of each of the particles. The electrode structure obtained as described above also has the withstanding voltage.

The electrode structure obtained by employing the manufacturing method according to the present invention can be applied to not only an anode material of a capacitor but also a cathode material thereof.

The aluminum material and the valve metal used in the manufacturing method according to the present invention will be described below.

### (An aluminum material)

In one embodiment of the present invention, the aluminum material as a base material which includes the valve metal and has the covering layer having the electrically conductive portion formed thereon is not particularly limited, and foil of pure aluminum or an aluminum alloy can be used. It is preferable that such an aluminum material has an aluminum purity of greater than or equal to 98% by mass which is a value measured in accordance with a method described in "JIS H 2111". As the aluminum material used in the present invention, also included are an aluminum alloy having composition in which at least one kind selected from the group consisting of alloy elements of lead (Pb), silicon (Si), iron (Fe), copper (Cu), manganese (Mn), magnesium (Mg), chromium (Cr), zinc (Zn), titanium (Ti), vanadium (V), gallium (Ga), nickel (Ni), and boron (B) is added, with an added amount thereof being within a required range; and aluminum having composition in which a content of the above-mentioned unavoidable impurity element is limited. Although a thickness of the aluminum material is not particularly limited, in general, it is preferable that the thickness thereof is within a range of greater than or equal to 5 µm and less than or equal to 200 µm.

As the above-mentioned aluminum material, an aluminum material manufactured by the heretofore known method can be used. For example, molten aluminum or a molten aluminum alloy, which has the above-mentioned predetermined composition, is prepared; the molten aluminum or the molten aluminum alloy is cast, thereby obtaining an ingot; and the obtained ingot is appropriately subjected to homogenization processing. Thereafter, this ingot is subjected to hot rolling and cold rolling, thereby allowing the aluminum material as a base material to be obtained. Midway through the step of the above-mentioned cold rolling, process annealing processing at a temperature within a range of greater than or equal to 150°C and less than or equal to 400°C may be conducted.

In addition, before the above-described step of forming the covering layer of the dielectric precursor including the valve metal (covering layer formation step), the aluminum material may be appropriately subjected to preprocessing.

### (A covering layer including valve metal and having an electrically conductive portion)

As described above, in the electrode structure according to the present invention, on the surface of the aluminum material, the covering layer including the valve metal and having the electrically conductive portion is formed. Since the covering layer has the electrically conductive portion, the covering layer has a high capacitance, as compared with a case where the covering layer has no electrically conductive portion.

The valve metal is not particularly limited, and magnesium, thorium, cadmium, tungsten, tin, iron, silver, silicon, tantalum, titanium, hafnium, aluminum, zirconium, niobium, and the like are cited. In particular, titanium, tantalum, hafnium, zirconium, or niobium is favorably used.

Although a thickness of the covering layer having the electrically conductive portion is not particularly limited, it is preferable that the thickness thereof is greater than or equal to 0.01 µm and less than or equal to 100 µm and further, it is preferable that the thickness thereof is greater than or equal to 0.05 µm and less than or equal to 20 µm. When the thickness is within the above-mentioned range, while industrial productivity is taken into consideration, a high capacitance can be ensured.

In addition, it is preferable that the covering layer having the electrically conductive portion is formed of particles including the valve metal.

Although a shape and a size of each of the above-mentioned particles are not particularly limited, it is preferable that the size of each of the particles is decreased in accordance with an increase in proximity to a surface of the aluminum material from a surface layer of the covering layer having the electrically conductive portion. The size of each of the particles is decreased in accordance with the increase in proximity to the surface of the aluminum material from the surface layer of the covering layer having the electrically conductive portion, whereby the particles in the surface layer of the covering layer are large and the particles in an interface contacting the surface of the aluminum material on an opposite side are minute. Since the particles in the surface layer of the covering layer are large, interstices among the particles therein are also large and when the electrode structure is used, infiltration of an electrically conductive liquid substance is made easy. Since the particles in the interface contacting the surface of the aluminum material on the opposite side are minute, a close layer is formed. Thus, an effect of enhancing adhesiveness of the covering layer and the aluminum material is brought about. Furthermore, as the size of each of the particles, it is preferable that a particle diameter is greater than or equal to 1 nm and less than or equal to 1 µm. The diameter of each of the particles, of which the covering layer is formed, being within the above-mentioned range is advantageous to achieve both the effect of enhancing the adhesiveness of the covering layer and the aluminum material in the interface contacting the surface of the aluminum material and an effect of expanding an surface area of each of the particles in order to increase a capacitance of the electrode structure. The particle diameter can be determined by selecting any 50 particles from a photograph of a cross section observed and shot by using a scanning transmission-type electron microscope (STEM: Scanning Transmission Electron Microscopy) and by calculating particle diameters thereof and obtaining an average value of the calculated particle diameters.

All part of the covering layer including the valve metal and having the electrically conductive portion may be formed of the electrically conductive portion including the valve metal, or the covering layer may be formed of a dielectric portion including the valve metal and the electrically conductive portion including the valve metal.

In a case where the covering layer is formed of the particles including the valve metal, it is preferable that the electrically conductive portion has an oxidation number different from that of a portion other than the electrically conductive portion and is present in at least one part of each of the particles. Here, the "one part" means, when attention is paid to one particle among the plurality of particles, one part of the one particle. It is only required that one part of one particle has an electrical conductivity and it is not required that a part other than the one part has the electrical conductivity.

Specifically, for example, in the case where the covering layer of the dielectric precursor including the valve metal is formed by employing the sol-gel method as described above and before the reduction heating step, the covering layer of the dielectric precursor including the valve metal does not have the electrical conductivity. However, after the covering layer of the dielectric precursor including the valve metal has undergone the reduction heating step, at least one part of each of the particles of which the covering layer of the dielectric precursor including the valve metal is formed is reduced, resulting in the formation of the covering layer having the electrically conductive portion. In this case, the electrically conductive portion comes to be present in at least the one part of each of the particles of which the covering layer is formed. The electrically conductive portion is present in at least the one part of each of the particles of which the covering layer is formed, whereby the covering layer has a high capacitance, as compared with a case where the electrically conductive portion is not present in each of the particles.

The particles including the valve metal are only required to include the valve metal and may be formed of any such as a single metal, an oxide, a hydroxide, a sulfide, and a nitride. Considering easiness of the above-described formation of the covering layer onto the surface of the aluminum material (for example, the formation is possible by employing an easy method like the above-described sol-gel method), it is preferable that the particles are formed of an oxide.

As the oxide including the valve metal, oxides of magnesium, thorium, cadmium, tungsten, tin, iron, silver, silicon, tantalum, titanium, hafnium, aluminum, zirconium, niobium, and the like are cited.

For example, when the oxide including the valve metal is the oxide of titanium, Ti₂O₅, TiO₂, Ti₂O₃, TiO, and the like are cited. It is said that among these titanium oxides, kinds of low oxides of titanium expressed as TiₙO₂ₙ₋₁ such as TiO and Ti₂O₃ exhibit comparatively favorable electrical conductivities. Accordingly, it is inferred that in a case where the covering layer including the valve metal and having the electrically conductive portion, formed after the reduction heating step, is formed of particles including the oxide of titanium, at least one part of each of the particles, of which the covering layer of the dielectric precursor including the valve metal is formed, is reduced, whereby any of the above-described kinds of low oxides of titanium exhibiting the electrical conductivities is present at least in the one part of each of the particles of which the covering layer is formed. In other words, it is inferred that the electrically conductive portion has an oxidation number different from that of a portion other than the electrically conductive portion (the oxidation number of the electrically conductive portion is lower (a smaller value) than that of the portion other than the electrically conductive portion). For this reason, it can be said that each of the particles of which the covering layer is formed may be formed of the electrically conductive portion formed of the low oxides each having the low oxidation number and a dielectric portion formed of a high oxide having a high oxidation number, and each of the particles of which the covering layer is formed may be formed of only the electrically conductive portion formed of the low oxide having the low oxidation number.

On the other hand, in a case where after the reduction heating step, the oxidation heating step or the anodic oxidation step is conducted, a state of (the particles including the valve metal) of which (the covering layer having the electrical conductivity is formed) further changes.

Specifically, each of the particles includes an inner portion and an outermost surface located outside the inner portion and at least one part of the outermost surface has a more oxidized dielectric than the inner portion. This allows the electrode structure to have a withstanding voltage.

Accordingly, when the above-described oxide of titanium is taken for example, it is inferred that through the reduction heating step, at least one part of each of the particles of which the covering layer of the dielectric precursor including the valve metal is formed is reduced and changes to any of the kinds of the low titanium oxides each exhibiting the comparatively favorable electrical conductivity, expressed as TiₙO₂ₙ₋₁ such as TiO and Ti₂O₃, and through the subsequent oxidation heating step or anodic oxidation step, the particles are oxidized and at least the one part of the outermost surface of each of the particles is rendered in a more oxidized state than the inner portion of each of the particles (that is, in a state where the oxidation number is high), and at least the one part of the outermost surface of each of the particles changes to be a dielectric. For this reason, it is said that each of the particles of which the covering layer is formed may be formed of the dielectric portion (inner portion) of the high oxide having the high oxidation number, the electrically conductive portion (intermediate portion) of the low oxide having the low oxidation number, and the dielectric portion (outermost surface) of the high oxide having the high oxidation number; and each of the particles of which the covering layer is formed may be formed of the electrically conductive portion (inner portion) of the low oxide having the low oxidation number and the dielectric portion (outermost surface) of the high oxide having the high oxidation number.

That the oxides having the different oxidation numbers are formed can be confirmed by conducting X-ray diffraction (XRD: X-ray diffraction) of the electrode structure.

### (An interposing layer)

The electrode structure according to the present invention includes the interposing layer, which includes the aluminum and the oxygen, between the aluminum material and the covering layer. This interposing layer is formed by conducting the above-described reduction heating step. This interposing layer is present, thereby achieving an effect of enhancing the adhesiveness of the aluminum material and the covering layer. In addition, this interposing layer includes no carbon, thereby neither leading to an increase in a leakage current nor leading to an electrical short circuit caused through contact with an electrolyte.

It is preferable that the interposing layer is formed in at least one region of the surface of the aluminum material. In addition, it is preferable that the interposing layer is formed of an aluminum oxide.

Ordinarily, the surface of the aluminum material has an oxide layer of aluminum naturally formed (natural oxide layer). Therefore, although the surface of the aluminum material has the natural oxide layer of the aluminum before the steps in the method, according to the present invention, for manufacturing the electrode structure are conducted, the aluminum oxide of which the interposing layer is formed exhibits a state clearly different from that of the above-mentioned natural oxide layer. Specifically, since the surface of the aluminum material has undergone the reduction heating step, it is expected that oxidation in a surface of an ordinary aluminum material is suppressed. However, in the electrode structure according to the present invention, the interposing layer including the aluminum and the oxygen is locally formed between the aluminum material and the covering layer in a thicker manner than the natural oxide layer of the aluminum material. It is not exactly known why the interposing layer is formed by undergoing the reduction heating step. Assumedly, it is inferred that oxygen included in the covering layer in the reduction heating step or oxygen remaining in the atmosphere upon the reduction heating reacts with the aluminum included in the aluminum material, the interposing layer including the aluminum and the oxygen is formed between the aluminum material and the covering layer having the electrically conductive portion.

In addition, a shape of the interposing layer is not particularly limited. However, a crystalline nucleus shape is preferable as the shape of the interposing layer in that an interposing layer having a form in which a crystalline nucleus substance is dispersed between the aluminum material and the covering layer suppresses an increase in an electrical resistance in an interface between the covering layer and the aluminum material.

Furthermore, a thickness of the interposing layer is also not particularly limited. However, it is preferable that the thickness thereof is greater than or equal to 10 nm and less than or equal to 500 nm in that an interposing layer having the thickness suppresses an increase in an electrical resistance.

### (A capacitor)

The electrode structure according to the present invention can be used as an electrode material of a capacitor. Although a kind of the capacitor is not particularly limited, for example, a solid electrolytic capacitor, a liquid electrolytic capacitor, and the like are cited. In addition, the electrode structure according to the present invention can be used as not only a cathode but also an anode of the capacitor.

### EXAMPLES

In accordance with the below-described examples 1 through 10 and comparison examples 1 through 4, electrode structures were prepared.

### (Example 1 and Comparison Example 1)

Aluminum foil having a thickness of 50 µm and a purity of 99.3% by mass was immersed in a titanium alkoxide solution and on both surfaces of the aluminum foil, covering layers each formed of a dielectric precursor having a thickness of 0.15 µm was formed.

Composition of the titanium alkoxide solution was as follows: Ti(n-OC₄H₉)₄: 0.15 mol, CH₃COCH₂COCH₃: 0.45 mol, C₂H₅OH: 18 mol, and H₂O: 0.3 mol. Under an environment having a humidity of less than or equal to 40%, the above-mentioned aluminum foil was immersed in the above-mentioned titanium alkoxide solution for 3 seconds and thereafter, was heated and dried in the air at a temperature of 100°C for 10 minutes. The above-mentioned immersing processing and heat treatment were repeated three times, thereby forming the covering layer formed of the dielectric precursor.

Thereafter, in example 1, the aluminum material whose each of the surfaces has the covering layer of the dielectric precursor formed thereon was retained in a hydrogen gas atmosphere at a temperature of 600°C for 10 hours and in comparison example 1, the aluminum material whose each of the surfaces has the covering layer of the dielectric precursor formed thereon was retained in a methane gas atmosphere at a temperature of 600°C for 10 hours, thereby obtained electrode structures.

### (Example 2)

The electrode structure obtained in example 1 was retained in the air at a temperature of 300°C for 10 minutes, thereby obtaining an electrode structure in example 2.

### (Example 3)

The electrode structure obtained in example 1 was anodized with a voltage of 2V, thereby obtaining an electrode structure in example 3. Anodizing conditions were as follows: in an ammonium adipate aqueous solution having 15% by mass and a temperature of 85°C, a direct current of 50 mA/cm² was applied thereto, and after the voltage had reached 2V, the electrode structure in example 3 was retained therein for 10 minutes.

### (Example 4)

The electrode structure obtained in example 2 was anodized with a voltage of 2V, thereby obtaining an electrode structure in example 4. Anodizing conditions were as follows: in an ammonium adipate aqueous solution having 15% by mass and a temperature of 85°C, a direct current of 50 mA/cm² was applied thereto, and after the voltage had reached 2V, the electrode structure in example 4 was retained therein for 10 minutes.

### (Example 5 through 7)

The same aluminum foil and titanium alkoxide solution as those in example 1 were used, and the immersing processing and heat treatment conducted in example 1 were repeated approximately 6 through 10 times, thereby forming each aluminum material whose both surfaces had covering layers of a dielectric precursor formed thereon, with each of the covering layers having a thickness of 1.0 µm. The aluminum materials were retained in a hydrogen gas atmosphere at a temperature of 600°C for 5 hours, 20 hours, and 40 hours, thereby obtaining electrode structures in example 5, example 6, and example 7, respectively.

### (Example 8)

The electrode structure obtained in example 7 was retained in the air at a temperature of 350°C for 2 minutes, thereby obtaining an electrode structure in example 8.

### (Examples 9 and 10)

In example 9, the electrode structure obtained in example 6 was retained in the air at a temperature of 300°C for 20 minutes and in example 10, the electrode structure obtained in example 6 was retained in the air at a temperature of 350°C for 20 minutes, thereby obtaining electrode structures.

### (Comparison Example 2)

The electrode structure obtained in comparison example 1 was retained in the air at a temperature of 300°C for 10 minutes, thereby obtaining an electrode structure in comparison example 2.

### (Comparison Example 3)

The electrode structure obtained in comparison example 1 was anodized with a voltage of 2V, thereby obtaining an electrode structure in comparison example 3. Anodizing conditions were as follows: in an ammonium adipate aqueous solution having 15% by mass and a temperature of 85°C, a direct current of 50 mA/cm² was applied thereto and after the voltage had reached 2V, the electrode structure in comparison example 3 was retained therein for 10 minutes.

### (Comparison Example 4)

Aluminum foil having a thickness of 100 µm and a purity of 99.9% by mass was subjected to alternating current etching and was anodized with a voltage of 2V, thereby obtaining an electrode structure in comparison example 4.

As a method of the alternating current etching, primary electrolytic etching, chemical etching, and secondary electrolytic etching, whose conditions were as described below, were conducted in order.

### <Primary electrolytic etching>

Electrolytic solution composition: (12 wt% hydrochloric acid + 1 wt% sulfuric acid + 100g of aluminum chloride)/liter
Temperature: 50°C
Current waveform: sine wave alternating current
Frequency: 60Hz
Current density: 200mA/cm²
Time: 60 seconds

### <Chemical etching>

Electrolytic solution composition: (20 wt% hydrochloric acid + 3 wt% sulfuric acid + 100g of aluminum chloride)/liter
Temperature: 60°C
Time: 120 seconds

### <Secondary electrolytic etching>

Electrolytic solution composition: (12 wt% hydrochloric acid + 1 wt% sulfuric acid + 100g of aluminum chloride)/liter
Temperature: 30°C
Current waveform: sine wave alternating current
Frequency: 60Hz
Current density: 160mA/cm²
Time: 300 seconds

Anodizing conditions were as follows: in an ammonium adipate aqueous solution having 15% by mass and a temperature of 85°C, a direct current of 50 mA/cm² was applied thereto and after the voltage had reached 2V, the electrode structure was retained therein for 10 minutes.

Regarding each of the electrode structures in examples 1 through 4 and comparison examples 1 through 4, obtained as described above, a capacitance and a resistance value were evaluated. Regarding each of the electrode structures in examples, 6, 9, and 10, obtained as described above, a capacitance and a voltage value upon the application of a constant current were evaluated as described below. Regarding the electrode structure in example 6, obtained as described above, a cross section observation was conducted as described below. Regarding each of the electrode structures in examples 5 through 8, obtained as described above, a texture structure analysis was conducted as described below.

### [Cross section observation]

The cross section observation was conducted by using a field-emission-type scanning electron microscope (FE-SEM: field emission SEM) (Ultra55 manufactured by Carl Zeiss) having a high resolution.

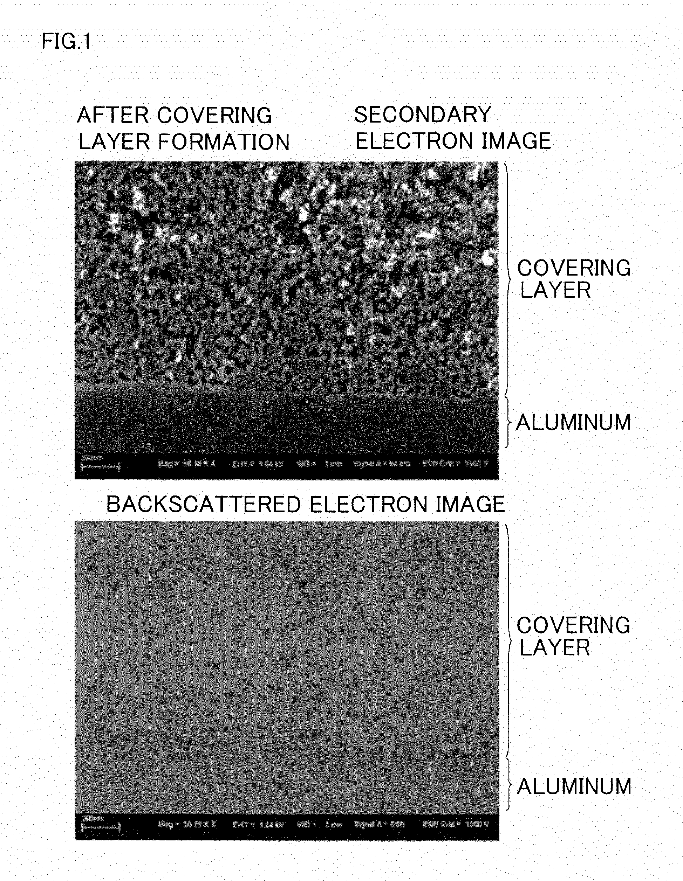

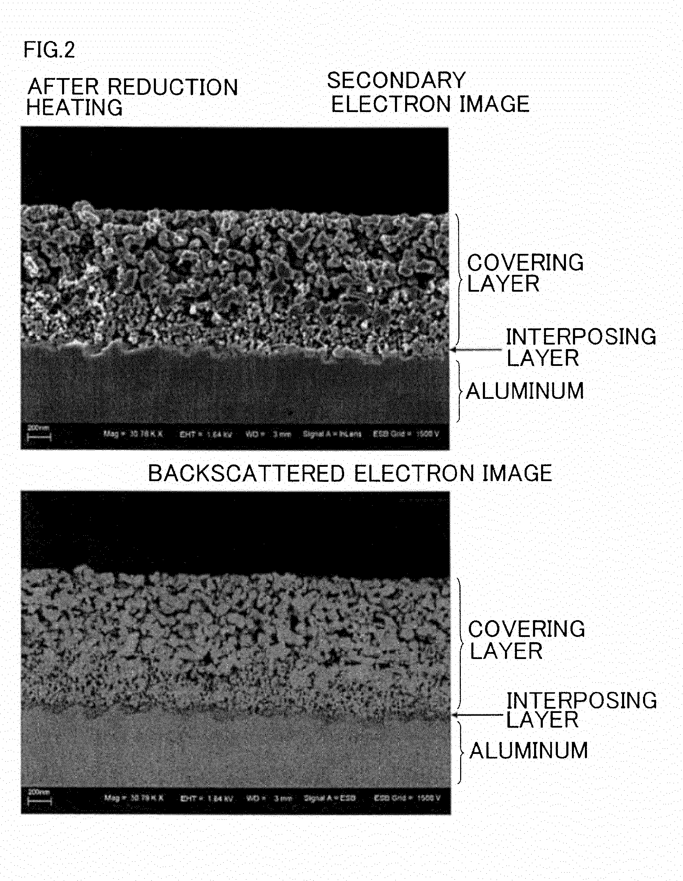

In example 6, (1) a cross section of the aluminum material, whose each of the surfaces had the covering layer of the dielectric precursor formed thereon, obtained after the covering layer formation step, and (2) a cross section of the electrode structure in example 6, obtained by being retained in the hydrogen gas atmosphere at the temperature of 600°C for 20 hours at the subsequent reduction heating step, were observed by using the field-emission-type scanning electron microscope, and photographs of the above-mentioned cross sections are shown in Fig. 1 and Fig. 2.

In Fig. 1, a photograph shown above is a secondary electron image and a photograph shown below is a backscattered electron image. It is seen from Fig. 1 that after the covering layer formation step, in the covering layer formed on the surface of the aluminum material, the minute particles, each having a particle diameter of less than 50 nm, which are formed of the dielectric precursor including the valve metal, are evenly present.

In addition, also in Fig. 2, a photograph shown above is a secondary electron image and a photograph shown below is a backscattered electron image. It is seen from Fig. 2 that after the reduction heating step, in the covering layer formed on the surface of the aluminum material, the particles which are formed of the dielectric precursor including the valve metal are grain-grown and the particles each having a particle diameter of less than 200 nm are present, and the particle diameter of each of the particles is decreased in accordance with an increase in proximity to a surface of the aluminum material from a surface layer of the covering layer. In addition, in the backscattered electron image shown in Fig. 2, it is seen from the difference of the color from the color of the aluminum that in the interposing layer between the aluminum material and the covering layer, a compound having composition different from that of the aluminum material is present in a dispersed manner.

In addition, in the electrode structure in example 1, the compound present in the interposing layer between the aluminum material and the covering layer was identified by using a scanning transmission-type electron microscope (STEM: Scanning Transmission Electron Microscopy) (TITAN80-300 manufactured by FEI) having a high resolution.

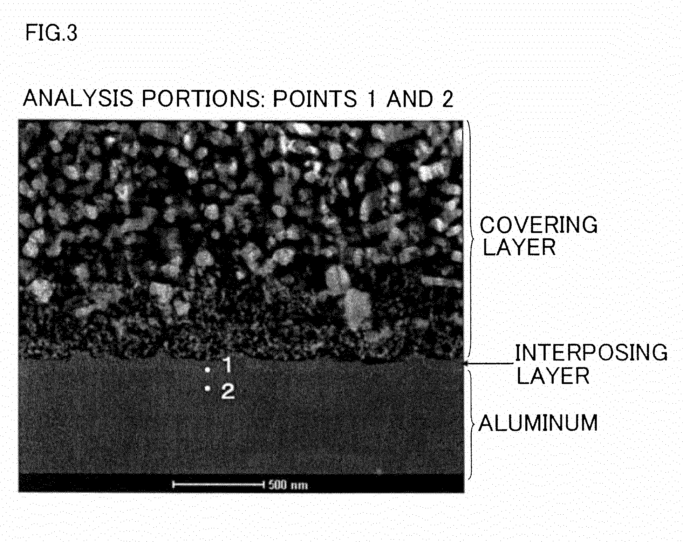

The cross section observation was conducted by using the scanning transmission-type electron microscope, and regarding two points in the aluminum material and the interposing layer, an energy dispersive X-ray analysis (EDX: Energy Dispersive X-ray spectroscopy) was conducted. The measurement points are shown in Fig. 3 and the analysis result is shown in Table 1.

Fig. 3 shows a high-angle annular dark-field image (HAADF: high-angle annular dark-field) of the electrode structure in example 1, observed by using the STEM. A contrast of the image shown in Fig. 3 is converse to that of the backscattered electron image, shown in Fig. 2, observed by using the FE-SEM. In Fig. 3, a point 1 shows an analyzed point in the interposing layer and a point 2 shows an analyzed point in the aluminum material.

Table 1 shows a quantitative analysis result of an aluminum component and an oxygen component at each of the points shown in Fig. 3.

**[Table 1]**

| Point | Al (at%) | O (at%) |
|---|---|---|
| 1 | 38.3 | 61.7 |
| 2 | 100 | 0.0 |

It is seen from Table 1 that because in the interposing layer (point 1) formed after the reduction heating step, the aluminum and the oxygen are detected in the atomic ratio of approximately 2 : 3, the compound present in the interposing layer and having the composition different from that of the aluminum material (point 2) is an aluminum oxide (Al₂O₃).

### [Texture structure analysis]

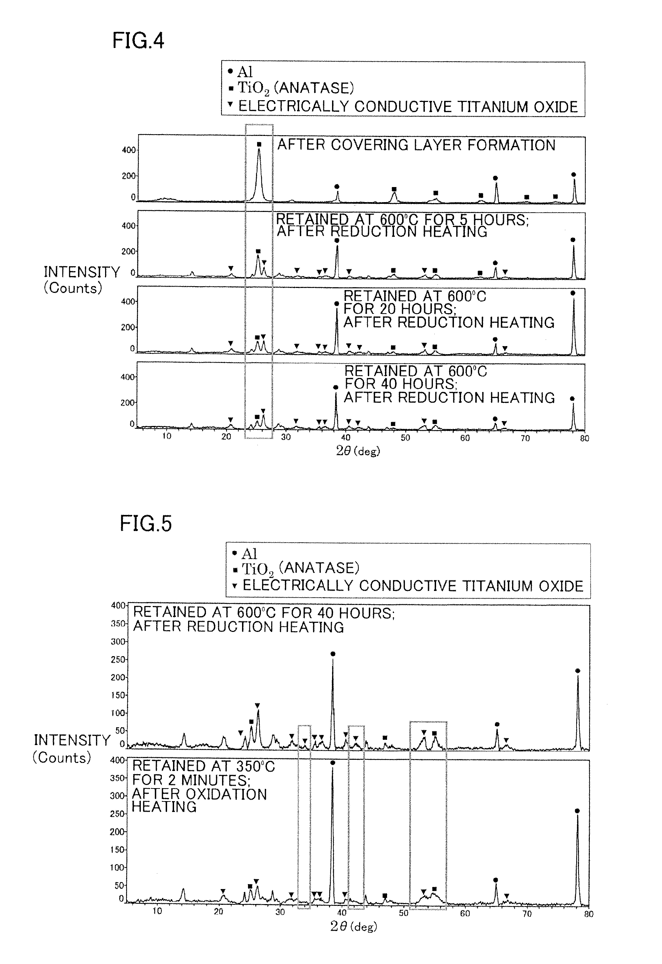

Regarding the aluminum material in example 5, whose each of the surfaces has the covering layer of the dielectric precursor formed thereon, obtained after the covering layer formation step and regarding the electrode structures in examples 5 through 7, obtained by being retained in the hydrogen gas atmosphere at the temperature of 600°C for the respective hours, an X-ray diffraction (XRD: X-ray diffraction) (RINT2000 manufactured by Rigaku) was conducted, and the result is shown in Fig. 4. In the X-ray diffraction, Cu-Kα rays were used, an acceleration voltage was 40kV, a scan axis 2θ was in a range from 5° to 80°, and a thin film X-ray diffraction method was employed.

The topmost curve in Fig. 4 shows an X-ray diffraction peak intensity of the aluminum material in example 5, whose each of the surfaces has the covering layer of the dielectric precursor formed thereon, obtained after the covering layer formation step. It is seen from this curve that a peak of the aluminum of the aluminum material and a peak of TiO₂ (anatase) as the dielectric precursor including the valve metal were detected.

The lower 3 curves in Fig. 4 show X-ray diffraction peak intensities of the electrode structures in examples 5 through 7 in order from the top among the lower curves. It is seen from these curves that in all of the electrode structures, peaks of the aluminum and peaks of the TiO₂ (anatase) as well as peaks of electrically conductive titanium oxides [Ti_{X}O_{Y} (X = 1 and Y = 2 are excluded)] obtained after at least one part of each of the dielectric precursors each including the valve metal had been reduced were detected. In addition, it is seen that when the retaining time in the reduction heating was prolonged, the peak intensity of TiO₂ (anatase) as the dielectric precursor including the valve metal became relatively small relative to the peak intensity of the electrically conductive titanium oxide and the reduction progressed. It is seen from the above-described result that after the reduction heating step, at least one part of the covering layer is reduced, and the covering layer has the electrically conductive titanium oxide portion.

Regarding the electrode structures in example 7 and example 8, the X-ray diffraction was conducted and the result is shown in Fig. 5. The upper curve in Fig. 5 shows an X-ray diffraction peak intensity of the electrode structure in example 7 and the lower curve in Fig. 5 shows an X-ray diffraction peak intensity of the electrode structure in example 8. It is seen from Fig. 5 that regarding the X-ray diffraction peak intensity in example 8, the peak of TiO₂ (anatase) as the dielectric precursor including the valve metal and the peak of the electrically conductive titanium oxide became broader than those of the X-ray diffraction peak intensity in example 7, and the peak of the electrically conductive titanium oxide became small in whole and partly disappeared. It is seen that this is because the oxidation heating was conducted in example 8 and therefore, the electrically conductive titanium oxide partly reacted with the oxygen and was oxidized. It is seen from the above-described result that at least one part of the electrically conductive titanium oxide portion formed by being reduced at the reduction heating step was oxidized after the oxidation heating step, whereby the covering layer had the dielectric portion.

### [A voltage value upon application of a constant current]

On one part of the covering layer of each of the electrode structures prepared in examples 6, 9, and 10, masking was conducted such that an exposed area of the covering layer was 1 cm². By using sandpaper, on an edge portion of this sample, the covering layer of the surface layer was scraped and the aluminum material portion was exposed. A working electrode terminal of an electrochemical system (HZ-3000 manufactured by Hokuto Denko Corporation) was connected to the aluminum material portion of each of the test samples prepared as described above, a reference electrode and a counter electrode terminal were connected to high-purity aluminum foil having a thickness of 150 pm and a purity of 99.99% by mass and in an ammonium adipate aqueous solution having a temperature of 25°C and 15% by mass, a DC constant current of 0.1 mA/cm² was applied thereto, and then, a voltage value was measured for 5 minutes.

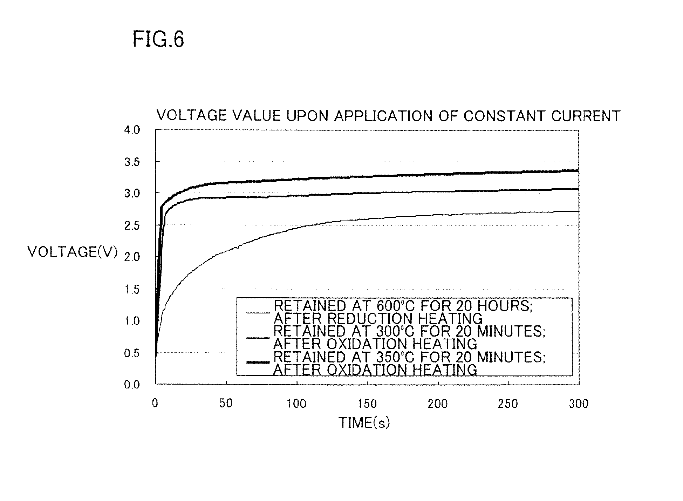

The measurement result is shown in Fig. 6. As shown in Fig. 6, although a voltage value of the electrode structure in example 6 (retained at 600°C for 20 hours; after the reduction heating) moderately continued to rise, voltage values of the electrode structures in example 9 (retained at 300°C for 20 minutes; after the oxidation heating) and in example 10 (retained at 350°C for 20 minutes; after the oxidation heating) initially rose sharply and thereafter, hardly rose. It is seen from this that in each of the electrode structures obtained in examples 9 and 10, the portion oxidized at the oxidation heating step functions as a dielectric. In addition, it is seen that when the oxidation heating temperature was made high as in example 10, the voltage value after the initial rise became large as compared with that in example 9, and the oxidation at the oxidation heating step progressed. It is seen from the above-mentioned result that because by conducting the oxidation heating step, the electrode structure comes to have a withstanding voltage, at least one part of an outermost surface of each of the particles or the like of which the covering layer containing the valve metal is formed has a more oxidized dielectric than an inner portion.

Here, regarding each of the electrode structures in examples 6, 9, and 10 and comparison example 4, based on a method of measuring a capacitance of chemical foil for a very low voltage for an electrolytic capacitor, defined in the EIAJ standard, a capacitance was evaluated, and the evaluation result is shown in Table 2.

**[Table 2]**

| | Capacitance [µF/cm²] |
|---|---|
| Example 6 | 1822 |
| Example 9 | 1154 |
| Example 10 | 661 |
| Comparison Example 4 | 342 |

It is seen from Table 2 that although the capacitances of the electrode structures in example 9 and 10 are lower than that of the electrode structure in example 6, the capacitances of the electrode structures in example 9 and 10 show extremely high values, as compared with that of the electrode structure in comparison example 4.

### [A capacitance]

Also regarding each of the electrode structures in examples 1 through 4 and comparison examples 1 through 4, based on the method of measuring the capacitance of the chemical foil for the very low voltage for the electrolytic capacitor, defined in the EIAJ standard, a capacitance was evaluated.

### [A resistance value]

Each of the electrode structures in examples 1 through 4 and comparison examples 1 through 4 was used an anode; on one part of the covering layer, masking was conducted such that an exposed area of the covering layer was 1cm²; a solution obtained by mixing 3,4-ethylenedioxythiophene as an electrically conductive macromolecule monomer, ferric p-toluenesulfonic acid as an oxidizing agent, and ethanol as a solvent was applied onto the exposed covering layer; and thereafter, the resultant was heated at a temperature of 105°C for one hour to be chemically polymerized, thereby forming a solid electrolyte layer as a cathode. A carbon layer as a cathode extraction layer was formed thereon, and further, a silver layer was formed on the carbon layer. By using sandpaper, on one part of each of the samples, on which the solid electrolyte layer, the carbon layer, and the silver layer were not formed, the covering layer of the surface layer was scraped, thereby exposing the aluminum portion. Terminals of an LCR meter (LCR HiTESTER 3522-50 manufactured by HIOKI E. E. CORPORATION) were pressed against surfaces of the aluminum portion and the silver layer of each of the test samples prepared as described above, and each resistance value was measured under the conditions that a frequency was 120Hz and a measurement voltage was 0.05Vrms. A distance between the portions against which the terminals were pressed was 3 cm. It can be said that in accordance with an increase in the resistance value, a film which has less leakage current and is sounder is formed on the surface of the electrode structure. In addition, it can be said that a resistance value equivalent to or more than the resistance value in comparison example 4, which is chemical etched foil generally used as an anode of a capacitor, has no problem.

The evaluation result described above is shown in Table 3.

**[Table 3]**

| | Capacitance [µF/cm²] | Resistance value [Ω] |
|---|---|---|
| Example 1 | 1074 | 3.86 |
| Example 2 | 892 | 6.93 |
| Example 3 | 956 | 4.72 |
| Example 4 | 874 | 7.51 |
| Comparison Example 1 | 1052 | 1.03 |
| Comparison Example 2 | 878 | 1.33 |
| Comparison Example 3 | 920 | 1.42 |
| Comparison Example 4 | 342 | 3.74 |

It is seen from Table 3 that in each of the electrode structures obtained in examples 1 through 4 according to the present invention, while the equivalent capacitance was maintained, the film having a high resistance (less leakage current) was formed, as compared with the electrode structures obtained in comparison examples 1 through 3. In addition, it is seen that as compared with the electrode structure obtained in comparison example 4, in each of the electrode structures obtained in examples 1 through 4 according to the present invention, an extremely high capacitance was exhibited and the resistance value was equivalent to or more than the resistance value in comparison example 4.

The described embodiment and examples are to be considered in all respects only as illustrative and not restrictive. It is intended that the scope of the invention is, therefore, indicated by the appended claims rather than the foregoing description of the embodiment and examples and that all modifications and variations coming within the meaning and equivalency range of the appended claims are embraced within their scope.

### INDUSTRIAL APPLICABILITY

According to the present invention, an electrode structure capable of suppressing a leakage current, having a high capacitance, and allowing an electrical short circuit caused through contact with an electrolyte to be suppressed can be obtained. In addition, preferably, an electrode structure is configured so as to have a withstanding voltage, and thus, the electrode structure which can be applied as an anode of a capacitor can be obtained.

## Claims

1. A method for manufacturing an electrode structure, comprising:
a covering layer formation step of forming on a surface of an aluminum material a covering layer of a dielectric precursor including valve metal; and
a reduction heating step of heating in a reducing atmosphere including no carbon the aluminum material having the covering layer formed thereon.

2. The method for manufacturing an electrode structure, according to claim 1, wherein the reducing atmosphere is an atmosphere including hydrogen.

3. The method for manufacturing an electrode structure, according to claim 1, wherein the reduction heating step is conducted at a temperature in a range of greater than or equal to 450°C and less than 660°C.

4. The method for manufacturing an electrode structure, according to claim 1, further comprising an oxidation heating step of heating the aluminum material in an oxidizing atmosphere after the reduction heating step.

5. The method for manufacturing an electrode structure, according to claim 1, further comprising an anodic oxidation step of anodizing the aluminum material after the reduction heating step.

6. An electrode structure, comprising:
an aluminum material;
a covering layer being formed on a surface of the aluminum material, including valve metal, and having an electrically conductive portion; and
an interposing layer being formed between the aluminum material and the covering layer and including aluminum and oxygen.

7. The electrode structure according to claim 6, wherein the interposing layer is formed in at least one region of the surface of the aluminum material.

8. The electrode structure according to claim 6, wherein the interposing layer is formed of an aluminum oxide.

9. The electrode structure according to claim 6, wherein the valve metal is one or more kinds selected from the group consisting of magnesium, thorium, cadmium, tungsten, tin, iron, silver, silicon, tantalum, titanium, hafnium, aluminum, zirconium, and niobium.

10. The electrode structure according to claim 6, wherein the covering layer is formed of particles including the valve metal, and the electrically conductive portion has an oxidation number different from an oxidation number of a portion other than the electrically conductive portion and is present in at least one part of each of the particles.

11. The electrode structure according to claim 10, wherein each of the particles includes an inner portion and an outermost surface located outside the inner portion and at least one part of the outermost surface has a more oxidized dielectric than the inner portion.

12. A capacitor comprising the electrode structure according to claim 6.
